# EUROPEAN PATENT SPECIFICATION

(11) **EP 1 947 364 B1**
(45) Date of publication and mention of the grant of the patent: **27.10.2010**
(21) Application number: 08007984.1
(22) Date of filing: 07.07.2006
(51) Int. Cl.: F16F 9/36, F16J 15/32

(54) **Sealing device for a shock absorber**
Dichtungsvorrichtung
Dispositif d'obturation

(43) Date of publication of application: 23.07.2008
(62) Divisional of application: 06014110.8
(73) Proprietor: Carl Freudenberg KG, 69469 Weinheim (DE)
(72) Inventor: Watling, Simon Peter, Blyth Northumberland NE24 2PR (GB)

(56) References cited:
- US-A- 4 508 020
- US-A- 5 868 552
- US-B1- 6 325 187
- US-B1- 6 443 436

## Description

### Technical Field

The invention relates to a sealing device for a turbo charger with a variable geometry, wherein the turbo charger comprises a turbo charger wheel, a translative movable nozzle ring surrounding the turbo charger wheel and accessed by translative movable rods, and a guiding supporting the rods, comprising a seal with a sealing lip which seals a lubricant in the guiding from an exhaust gas passing the turbo charger wheel, wherein the sealing lip is pre-bent in the direction of the turbo charger wheel.

### State Of The Art

US-A-6 868 552 discloses a variable geometry turbine in which a turbine wheel is mounted to rotate about a pre-determined axis within a housing. A sidewall is displaceable relative to the housing to control the width of a gas flow passage defined adjacent the wheel between the first surface defined by the sidewall and the second surface defined by the housing. The sidewall is mounted in the sidewall cavity within the housing on axially displaceable rods extending parallel to the rotation axis of the wheel. A yoke is pivotally supported within the housing and defines arms each of which extends into engagement with a respective sidewall support rod. The yoke is located within a yoke chamber to lubricate both the bearing upon which the yoke is pivotally mounted in the housing and surfaces which interengage the yoke and the sidewall support rods. The yoke chamber is spaced from sealed against communication with the sidewall cavity.

A sealing device comprising one sealing lip which is pre-bent in the direction of the interior of a pneumatic spring is known as such, for example, from US-B-6 325 187, disclosing a sealing device for sealing annular space of a shock absorber against said interior of a pneumatic spring.

The object of the invention is to provide a sealing device which is used in a turbo charger and which seals reliably even where there are high pressures inside the pneumatic spring.

This object is achieved with the features of Claims 1 and 6. The sub-claims relate to advantageous designs.

To achieve the object of the invention the sealing lip of the sealing device is pre-bent in the direction of the turbo charger wheel. The sealing lip may have several sealing edges. Here the sealing lip has in most cases two sealing edges, each of which are in sealing contact on the pneumatic spring piston under initial elastic tension. Sealing edges have a high surface pressure with low frictional resistance, so that when the friction is low a high sealing action can be achieved. The sealing action is further improved if at least two sealing edges are provided. In this case, when there is high pressure in the annular shock absorber space, one of the two sealing edges may be raised from the pneumatic spring piston and the other remains in sealing contact. This provides a leak-free seal even at high pressures.

The sealing lip may consist of Elastomer or PTFE. Elastomeric materials such as NBR are commonly used. PTFE is a material that is resistant to a plurality of hydraulic fluids and has a low friction value.

Brief Description Of The Drawings

Some embodiments of the sealing device characterising the invention are explained in greater detail in the following with reference to the figures, which show diagrammatically the following:
Fig. 1 shows a pneumatic spring-damper arrangement according to the invention;
Fig. 2 shows a first design of a seal characterising the invention;
Fig. 3 shows a second design of a seal characterising the invention;
Fig. 4 shows a third design of a seal characterising the invention;
Fig. 5 shows a fourth design of a seal characterising the invention;
Fig. 6 shows the sealing device assembled in a turbo charger, according to the invention.

### Construction Of The Invention

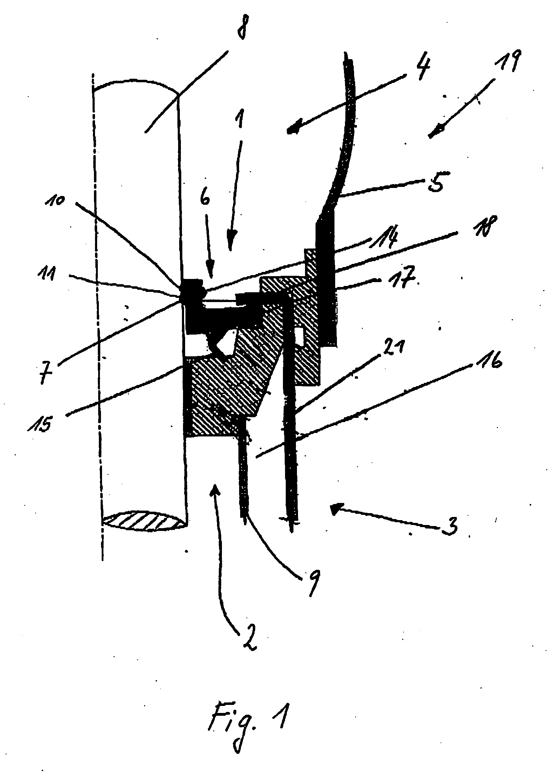

Figure 1 shows a pneumatic spring-damper arrangement 19 for the suspension of a motor vehicle. Pneumatic spring-damper arrangement 19 incorporates a shock absorber 3, which consists of two shock absorber pipes 9, 21 pushed into each other. A pneumatic spring piston 8 is arranged axially movably in inner shock absorber pipe 9, forming an annular space 2. A further annular space 16 is formed between shock absorber ppes 9, 21. The annular space 2 is completely filled with hydraulic fluid, and the further annular space 16 is filled partially with hydraulic fluid and partially with a gas under pressure. The pneumatic spring piston 8 is guided out of shock absorber pipe 9 on a front side on which pneumatic spring 5 is also arranged. On this front side there is a sealing device 1 which seals the medium in annular spaces 2, 16 of the shock absorber 3 against the inside 4 of pneumatic spring 5. Sealing device 1 consists of a seal 6, with a sealing lip 7 which is pre-bent in the direction of the inside 4 of the pneumatic spring. The sealing lip 7 consists of Elastomer and has several, in this design two, sealing edges 10, 11. An annular spring 14 is arranged on side 4 of the inside of the pneumatic spring on the outer circumference. Here the sealing lip 7 is constructed by designing annular spring 14 and the wall thickness of sealing 7 so that it opens in the direction of the inside 4 of the pneumatic spring when the pressure in annular space 2 of shock absorber 3 is at least five bars greater than the pressure in the inside 4 of the pneumatic spring. Seal 6 has a valve lip 15 which seals annular space 2 against further annular space 16 of shock absorber 3. Here valve lip 15 is designed so that the medium to be sealed is able to flow from annular space 2 into further annular space 16 of shock absorber 3. In the opposite direction valve lip 15 locks and therefore acts as a check valve. Sealing lip 7 and valve lip 15 are secured to a support ring 17. Furthermore, a peripheral static seal 18 is arranged on the side facing pneumatic spring 5. Static seal 18, sealing lip 7 and valve lip 15 are of uniform material and are constructed in one piece.

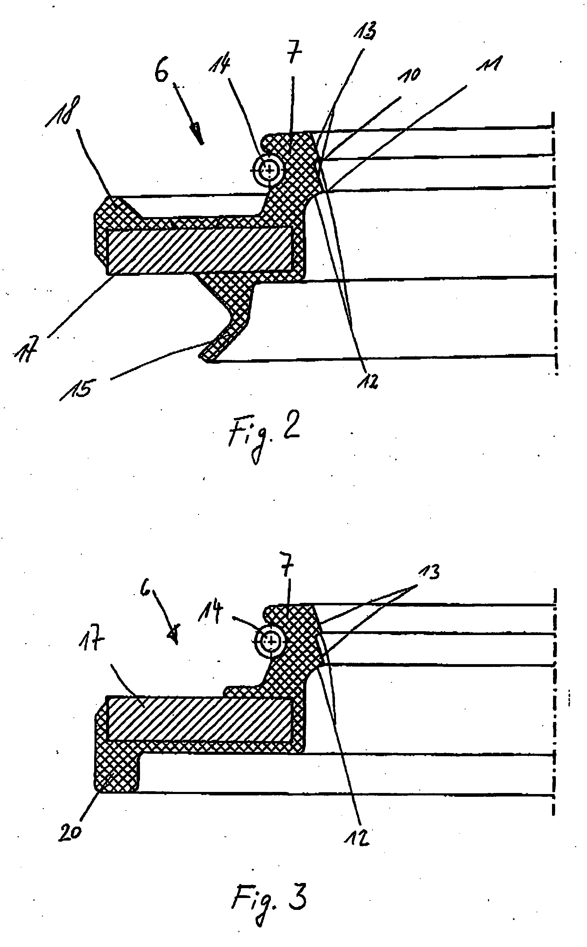

Figure 2 shows a seal 6 for a sealing device 1 according to Figure 1. The sealing lip 7 has two sealing edges 10, 11, wherein flanks 12, 13 associated with sealing edges 10, 11 are designed so that flanks 12 pointing in the direction of shock absorber 3 have a greater pitch than flanks 13 pointing in the direction of pneumatic spring 5. In this design flanks 12, pointing in the direction of shock absorber 3, are at an angle of 110° to pneumatic spring piston 8, and the flanks pointing in the direction of pneumatic spring 5 are at an angle of 15° to the pneumatic spring piston 8.

Figure 3 shows a seal 6 according to Figure 2, but no valve lip 15 is provided in this design. The seal 6 has a peripheral further static seal 20 on the side of support ring 17 opposing sealing lip 7, which static seal 20 is constructed integrally with seal lip 7 and is of the same material.

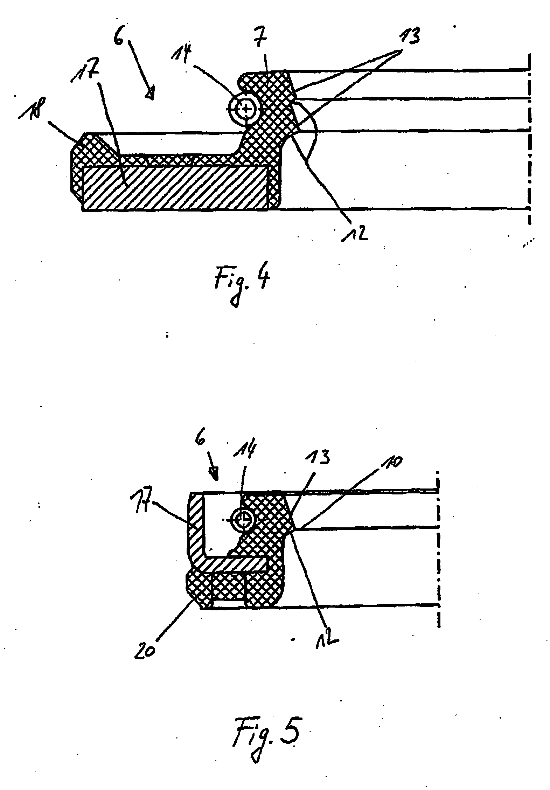

Figure 4 shows a seal 6 according to Figure 3, but this design has the static seal pointing to air side.

Figure 5 shows a seal 6 for a sealing device 1 according to Figure 1. Sealing lip 7 has a sealing edge 10, flanks 12, 13 associated with sealing edge 10 being designed so that flanks 12 pointing in the direction of shock absorber 3 have a greater pitch than flank 13 pointing in the direction of pneumatic spring 5. In this design flank 12, pointing in the direction of the shock absorber, is at an angle of 110° to pneumatic spring piston 8, and the flank pointing in the direction of pneumatic spring 5 is an angle of 15° to pneumatic spring piston 8. Support ring 17 is designed as a metal punched part and has two flanges perpendicular to each other. Sealing lip 7 moulded onto support ring 17 and a further static seal 20 is moulded integrally onto support ring 17 with sealing lip 7 and is of the same material as the ring.

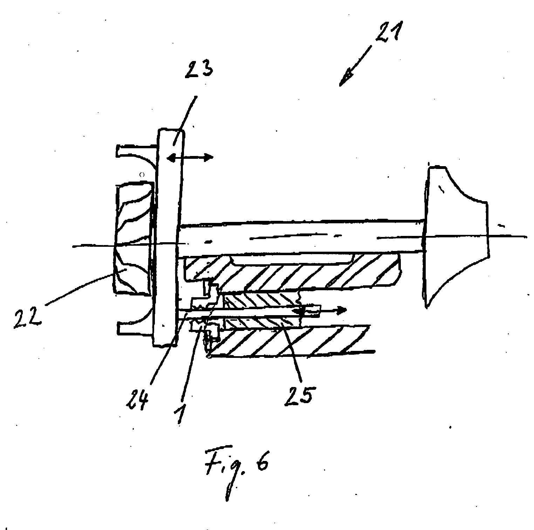

The sealing device 1 is applied to seal predominantly translative moved components in turbo chargers 21, in particular exhaust gas turbo chargers as shown in figure 6. Turbo chargers 21 with a variable geometry are state of the art. The sealing device 1 can be used in turbo chargers 21 with moving sidewall geometry. In those embodiments the turbo charger 21 wheel 22 is surrounded by a ring of fixed angle nozzle guide vanes on a translative movable carrier 23. The flow area is varied by changing the width of the flow passage. The sliding nozzle ring 23 is accessed by translative movable rods 24. The rods 24 are supported in a guiding 25 and the sealing device 1 separates the lubricant in the guiding 25 from the exhaust gas passing the wheel 22.

## Claims

1. A turbo charger (21) with a variable geometry, comprising a turbo charger wheel (22), a translative movable nozzle ring (23) surrounding the turbo charger wheel (22) and accessed by translative movable rods (24), and a guiding (25) supporting the rods (24), **characterized by** a sealing device (1) comprising a seal (6) with a sealing lip (7) which seals a lubricant in the guiding (25) from an exhaust gas passing the

2. The turbo charger (21) according to Claim 1, **characterised in that** the sealing lip (7) of the sealing device (1) has several sealing edges (10, 11).

3. The turbo charger (21) according to Claims 1 or 2, **characterised in that** the sealing lip (7) of the sealing device (1) consists of Elastomer or PTFE.

4. The turbo charger (21) according to one of Claims 1 to 3, **characterised in that** an annular spring (14) is arranged on the sealing lip (7) of the sealing device (1) on the side of the outer circumference.

5. The turbo charger (21) according to one of Claims 1 to 4, **characterised in that** the seal (6) of the sealing device (1) has a support ring (17) on which on the peripheral side a static seal (18, 20) is arranged.
turbo charger wheel (22), wherein the sealing lip (7) is pre-bent in the direction of the turbo charger wheel (22).

6. Use of a sealing device (1) for sealing a turbo charger (21) with a variable geometry,
wherein the turbo charger (21) comprises a turbo charger wheel (22), a translative movable nozzle ring (23) surrounding the turbo charger wheel (22) and accessed by translative movable rods (24), and a guiding (25) supporting the rods (24),
wherein the sealing device comprises a seal (6) with a sealing lip (7) which seals a lubricant in the guiding (25) from an exhaust gas passing the turbo charger wheel (22), wherein the sealing lip (7) is pre-bent in the direction of the turbo charger wheel (22).

## Patentansprüche

1. Turbolader (21) mit einer variablen Geometrie, der ein Turboladerrad (22), einen translatorisch beweglichen Düsenring (23), der das Turboladerrad (22) umgibt und auf den durch translatorisch bewegliche Stangen (24) zugegriffen wird, und eine Führung (25), die die Stangen (24) abastützt, aufweist, **gekennzeichnet durch** eine Dichtungsvorrichtung (1) mit einer Dichtung (6) mit einer Dichtungslippe (7), die ein Schmiermittel in der Führung (25) gegenüber einem Abgas abdichtet, das am Turboladerrad (22) vorbei strömt, wobei die Dichtungslippe (7) in der Richtung des Turboladerrades (22) vorgebogen ist.

2. Turbolader (21) nach Anspruch 1, **dadurch gekennzeichnet, dass** die Dichtungslippe (7) der Dichtungsvorrichtung (1) mehrere Dichtungskanten (10, 11) aufweist.

3. Turbolader (21) nach den Ansprüchen 1 oder 2, **dadurch gekennzeichnet, dass** die Dichtungslippe (7) der Dichtungsvorrichtung (1) aus Elastomer oder PTFE besteht.

4. Turbolader (21) nach einem der Ansprüche 1 bis 3, **dadurch gekennzeichnet, dass** eine ringförmige Feder (14) an der Dichtungslippe (7) der Dichtungsvorrichtung (1) auf der Seite des äußeren Umfangs angeordnet ist.

5. Turbolader (21) nach einem der Ansprüche 1 bis 4, **dadurch gekennzeichnet, dass** die Dichtung (6) der Dichtungsvorrichtung (1) einen Stützring (17) aufweist, an dem auf der Umfangsseite eine statische Dichtung (18, 20) angeordnet ist.

6. Verwendung einer Dichtungsvorrichtung (1) zum Abdichten eines Turboladers (21) mit einer variablen Geometrie,
wobei der Turbolader (21) ein Turboladerrad (22), einen translatorisch beweglichen Düsenring (23), der das Turboladerrad (22) umgibt und auf den durch translatorisch bewegliche Stangen (24) zugegriffen wird, und eine Führung (25), die die Stangen (24) abstützt, aufweist,
wobei die Dichtungsvorrichtung eine Dichtung (6) mit einer Dichtungslippe (7) aufweist, die ein Schmiermittel in der Führung (25) gegenüber einem Abgas abdichtet, das am Turboladerrad (22) vorbei strömt, wobei die Dichtungslippe (7) in der Richtung des Turboladerrades (22) vorgebogen ist.

## Revendications

1. Turbocompresseur (21) de géométrie variable, comprenant une roue de turbocompresseur (22), un distributeur annulaire (23) déplaçable en translation, entourant la roue de turbocompresseur (22) et auquel accèdent des tiges (24) déplaçables en translation, et un guide (25) supportant les tiges (24), **caractérisé par** un dispositif d'étanchéité (1) comprenant un joint (6) avec une lèvre d'étanchéité (7) qui isole un lubrifiant dans le guide (25) par rapport à un gaz d'échappement passant à travers la roue de turbocompresseur (22), la lèvre d'étanchéité (7) étant précourbée dans la direction de la roue de turbocompresseur (22).

2. Turbocompresseur (21) selon la revendication 1, **caractérisé en ce que** la lèvre d'étanchéité (7) du dispositif d'étanchéité (1) présente plusieurs bords d'étanchéité (10, 11).

3. Turbocompresseur (21) selon la revendication 1 ou 2, **caractérisé en ce que** la lèvre d'étanchéité (7) du dispositif d'étanchéité (1) est constituée d'élastomère ou de PTFE.

4. Turbocompresseur (21) selon l'une quelconque des revendications 1 à 3, **caractérisé en ce qu'**un ressort annulaire (14) est agencé sur la lèvre d'étanchéité (7) du dispositif d'étanchéité (1) sur le côté de la circonférence extérieure.

5. Turbocompresseur (21) selon l'une quelconque des revendications 1 à 4, **caractérisé en ce que** le joint (6) du dispositif d'étanchéité (1) a un anneau de support (17) sur lequel est agencé un joint statique (18, 20) du côté périphérique.

6. Utilisation d'un dispositif d'étanchéité (1) pour étancher un turbocompresseur (21) de géométrie variable,
le turbocompresseur (21) comprenant une roue de turbocompresseur (22), un distributeur annulaire (23) déplaçable en translation entourant la roue de turbocompresseur (22) et auquel accèdent des tiges (24) déplaçables en translation, et un guide (25) supportant les tiges (24),
le dispositif d'étanchéité comprenant un joint (6) avec une lèvre d'étanchéité (7) qui isole un lubrifiant dans le guide (25) par rapport à un gaz d'échappement passant à travers la roue de turbocompresseur (22), la lèvre d'étanchéité (7) étant précourbée dans la direction de la roue de turbocompresseur (22).
